# FASCICULE DE BREVET EUROPEEN

(11) **EP 1 170 653 B1**
(45) Date de publication et mention de la délivrance du brevet: **30.11.2005**
(21) Numéro de dépôt: 01401658.8
(22) Date de dépôt: 22.06.2001
(51) Int. Cl.: G05D 16/06

(54) **Détendeur de gaz à soupape**
Gasdruckreduzierventil
Gas pressure reducing valve

(30) Priorité: 06.07.2000 FR 0008782
(43) Date de publication de la demande: 09.01.2002
(73) Titulaire: BRIFFAULT S.A., 75011 Paris (FR)
(72) Inventeur: Schladerer, Max, 27610 Romilly-Sur-Andelle (FR); Mansuy, Alain, 27610 Romilly-Sur-Andelle (FR)
(74) Mandataire: Eidelsberg, Victor Albert

(56) Documents cités:
- DE-A- 3 013 763
- DE-A- 3 041 981
- FR-A- 2 654 177

## Description

La présente invention se rapporte aux détendeurs de gaz et, plus particulièrement, à ceux destinés à être montés en aval d'un autre détendeur de gaz. Le gaz fourni par le détendeur en amont est détendu dans le détendeur visé par l'invention à une pression plus basse. Le détendeur est conçu pour une pression d'entrée donnée par le détendeur en amont se trouvant dans un certain intervalle de pression. Si un incident se produit sur le détendeur en amont, cette pression d'entrée peut s'élever brusquement au-delà de l'intervalle prévu, en atteignant des valeurs dix fois supérieures et même vingt fois supérieures à la pression normale qui doit régner à l'entrée du détendeur. La pression à la sortie du détendeur augmente également et devient supérieure à ce qui est admissible.

La présente invention remédie à cet inconvénient par un détendeur de gaz dans lequel, même si la pression anormale de fonctionnement régnant dans le conduit d'entrée est bien supérieure à la pression normale de fonctionnement dans le conduit d'entrée, la pression à la sortie du détendeur reste dans des limites admissibles.

L'invention a donc pour objet un détendeur de gaz, comme défini à la revendication 1.

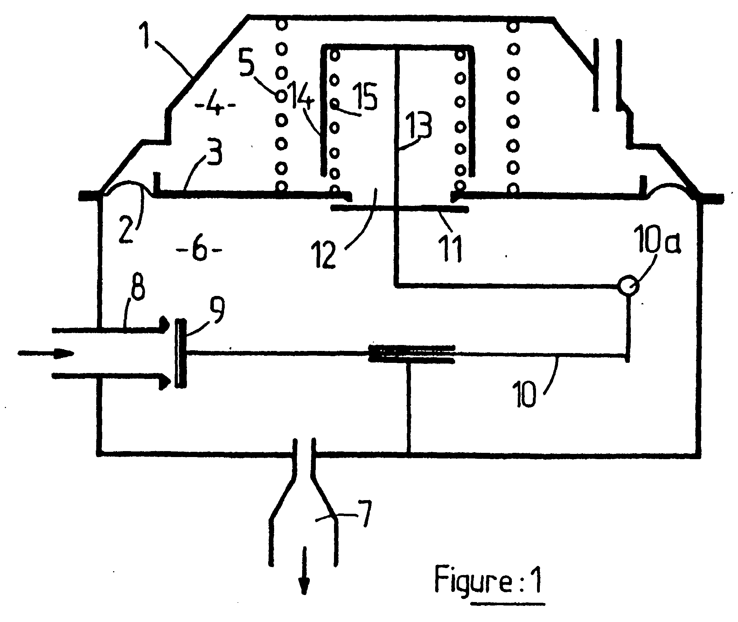

Au FR-2 654 177A, il est prévu des moyens de désolidarisation de la membrane et du clapet par un mécanisme à tube et à billes. Au-delà d'une certaine pression, la membrane n'agit plus sur la tringlerie. Le ressort (28 à la figure 1) repousse la tringlerie et le clapet vient sur le siège 9 secondaire. Le mécanisme est compliqué par son tube et ses billes, nécessite un clapet à deux sièges et un réarmement manuel.

Au DE-30 41 981, on désolidarise aussi la membrane de la tringlerie en cas de surpression pour ne déformer ni le plateau de membrane, ni la tringlerie. On ne ménage pas de limitation du déplacement de la membrane.

Alors que jusqu'ici les moyens de limitation du déplacement de la membrane en direction de la première chambre était fixe et notamment prévus sur le corps en sorte que, lorsqu'une pression anormale d'entrée régnait dans le conduit d'entrée et donc également une pression anormalement élevée régnait dans la deuxième chambre, le ressort de soupape trop faible n'était plus à même d'agir sur l'équipage mobile et le clapet s'ouvrait, suivant l'invention, comme les moyens de limitation, qui sont formés notamment par une butée disposée dans la première chambre ou par le fait que le ressort de soupape est, en position comprimée, à spires jointives, font partie de l'équipage mobile, lorsque la membrane vient buter sur ces moyens de limitation, la membrane vient en contact avec l'équipage directement, et non plus par l'intermédiaire du ressort de soupape, en sorte que la faiblesse relative de celui-ci ne joue plus. La membrane et l'équipage solidarisés sont alors en mesure de maintenir le clapet fermé.

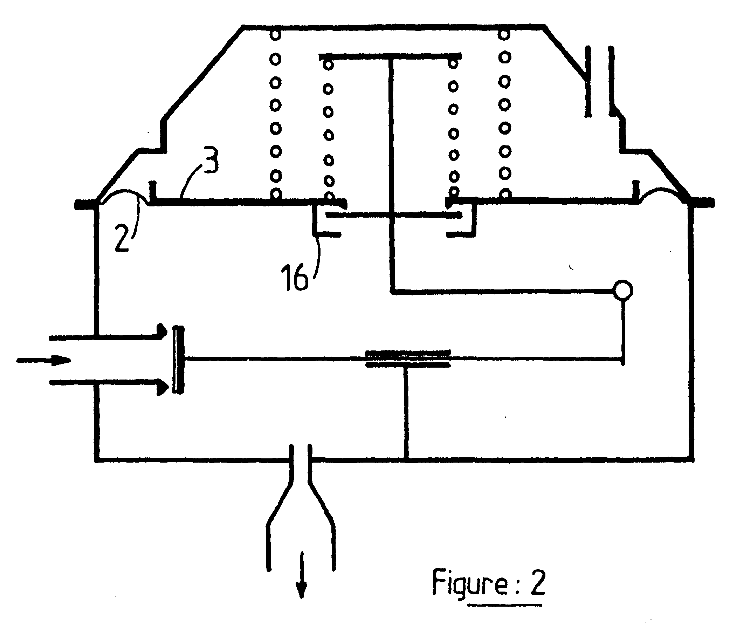

Les figures 1 et 2 du dessin annexé sont des vues en coupe de deux modes de réalisation d'un détendeur de gaz suivant l'invention.

Le détendeur représenté à la figure comprend un corps 1 subdivisé par une membrane 2 ayant un plateau 3 en une première chambre 4 dans laquelle un ressort 5 de consigne est monté de manière à repousser la membrane 2 vers une deuxième chambre 6. Dans la deuxième chambre 6 ou chambre de basse pression, débouche, outre un raccord 7 de sortie, un conduit 8 d'entrée muni d'un clapet 9 à un seul siège amont. Le clapet 9 est relié par une tringlerie 10 basculant autour du pivot 10a à un siège 11 de soupape pouvant s'appliquer sur le bord d'une ouverture 12 ménagée dans la membrane 2 et dans le plateau 3 de manière à former une soupape. Le siège 11 est prolongé par une tige 13 qui passe dans l'ouverture 12 et qui s'étend dans la chambre 4. La tige 13 est solidaire d'une butée 14 sur laquelle la membrane 2 et le plateau 3 viennent buter lorsqu'ils se déplacent en direction de la chambre 4 sous l'effet d'une forte pression régnant dans la chambre 6. Une extrémité d'un ressort 15 de soupape est en contact avec le plateau 3, tandis que l'autre extrémité du ressort 15 est en contact avec la butée 14.

Lorsqu'une pression anormalement élevée règne dans le conduit 8, par exemple parce qu'un incident s'est produit sur un détendeur en amont, la membrane 2 et son plateau 3, vient au contact de la butée 14 et prend le relais du ressort 15. Lorsque la pression continue à s'élever dans le conduit 8 et donc dans la chambre 6, la membrane continue à aller vers la chambre 4 en entraînant la butée 14 et donc en entraînant également le siège 11, la tringlerie 10 et en fermant ainsi de plus en plus le clapet 9.

Dans l'autre mode de réalisation de la figure 2, la membrane porte un étrier 16 qui s'étend dans la deuxième chambre et la butée portée par la tige se trouve aussi dans la deuxième chambre et vient en butée sur l'étrier 16.

## Revendications

1. Détendeur de gaz, comprenant un corps (1) subdivisé par une membrane (2,3) en une première chambre (4) dans laquelle un ressort (5) de consigne est monté de manière à repousser la membrane (2,3) et en une deuxième chambre (6) dans laquelle débouche, outre un raccord (7) de sortie, un conduit (8) d'entrée muni d'un clapet (9), et un équipage mobile solidaire en déplacement du clapet (9) et comprenant, dans la deuxième chambre (6), un siège (11) conjugué de la membrane (2,3) en définissant avec une ouverture (12) de celle-ci une soupape, et un ressort (15) de soupape monté de manière à rapprocher la membrane (2,3) du siège (11), **caractérisé en ce que** le déplacement de la membrane (2,3) en direction de la première chambre (4) est limité par des moyens (14) de limitation qui font partie de l'équipage mobile.

2. Détendeur de gaz suivant la revendication 1, **caractérisé en ce que** les moyens de limitation sont formés par une butée.

3. Détendeur de gaz suivant la revendication 1, **caractérisé en ce que** les moyens de limitation sont formés par le fait que le ressort (15) de soupape est à spires jointives lorsqu'il est comprimé complètement.

4. Détendeur de gaz suivant l'une des revendications précédentes, **caractérisé en ce que** la pression anormale de fonctionnement régnant dans le conduit d'entrée est au moins dix fois supérieure et même vingt fois supérieure à la pression normale de fonctionnement dans le conduit d'entrée.

5. Détendeur de gaz suivant l'une des revendications précédentes, **caractérisé en ce que** le clapet (9) a un seul siège amont.

## Patentansprüche

1. Gasdruckreduzierventil, welches ein Gehäuse (1) aufweist, das durch eine Membran (2, 3) in eine erste Kammer (4), in welcher eine Sollwertfeder (5) dergestalt angeordnet ist, dass die Membran (2, 3) rückstellbar ist, und in eine zweite Kammer (6) unterteilt ist, in welche außer einem Auslassanschluss (7) eine mit einer Klappe (9) versehene Einlassleitung (8) und eine einstückige bewegliche Vorrichtung (10) zur Verstellung der Klappe (9) einmündet, und wobei es in der zweiten Kammer (6) einen mit der Membran (2, 3) gekoppelten Sitz (11), der mit einer Öffnung (12) derselben ein Ventil bildet, und eine Ventilfeder (15) aufweist, welche so angeordnet ist, dass die Membran (2, 3) an den Sitz (11) herangebracht ist, **dadurch gekennzeichnet, dass** die Verstellung der Membran (2, 3) in Richtung der ersten Kammer (4) durch Begrenzungseinrichtungen (14) begrenzt ist, welche einen Abschnitt der beweglichen Vorrichtung bilden.

2. Gasdruckreduzierventil nach Anspruch 1, **dadurch gekennzeichnet, dass** die Begrenzungseinrichtungen durch eine Widerlager gebildet sind.

3. Gasdruckreduzierventil nach Anspruch 1, **dadurch gekennzeichnet, dass** die Begrenzungseinrichtungen **dadurch** gebildet sind, dass Ventilfeder (15) Windungen aufweist, welche aneinander liegen, wenn sie vollständig zusammengedrückt ist.

4. Gasdruckreduzierventil nach einem der vorhergehenden Ansprüche, **dadurch gekennzeichnet, dass** der anormale Betriebsdruck, der in der Einlassleitung herrscht, mindestens zehnmal größer und sogar zwanzigmal größer als der normale Betriebsdruck in der Einlassleitung ist.

5. Gasdruckreduzierventil nach einem der vorhergehenden Ansprüche, **dadurch gekennzeichnet, dass** die Klappe (9) einen einzigen Sitz hochdruckseitig aufweist.

## Claims

1. Gas pressure-reducing valve comprising a body (1) subdivided by a diaphragm (2, 3) into a first chamber (4), in which a setpoint spring (5) is mounted so as to repel the diaphragm (2, 3), and into a second chamber (6) into which opens, besides an outlet connector (7), an inlet pipe (8) provided with a shutter (9), and a moving assembly which moves as one with the shutter (9) and comprises, in the second chamber (6), a seat (11) paired with the diaphragm (2, 3) and defining, together with an opening (12) in this diaphragm, a valve, and a valve spring (15) mounted so as to bring the diaphragm (2, 3) closer to the seat (11), **characterized in that** the movement of the diaphragm (2, 3) in the direction of the first chamber (4) is limited by limiting means (14) which form part of the moving assembly.

2. Gas pressure-reducing valve according to Claim 1, **characterized in that** the limiting means are formed by a stop.

3. Gas pressure-reducing valve according to Claim 1, **characterized in that** the limiting means are formed by the fact that the valve spring (15) has contiguous turns when it is completely compressed.

4. Gas pressure-reducing valve according to one of the preceding claims, **characterized in that** the abnormal operating pressure prevailing in the inlet pipe is at least ten times greater and even twenty times greater than the normal operating pressure in the inlet pipe.

5. Gas pressure-reducing valve according to one of the preceding claims, **characterized in that** the shutter (9) has a only one upstream seat.
